# FASCICULE DE BREVET EUROPEEN

(11) **EP 0 758 970 B1**
(45) Date de publication et mention de la délivrance du brevet: **20.11.2002**
(21) Numéro de dépôt: 95930576.4
(22) Date de dépôt: 12.09.1995
(51) Int. Cl.: B62M 11/06, B62M 11/14, B62K 19/44

(54) **CHANGEMENT DE VITESSE AUTOMATIQUE A SELECTION DIFFERENTIELLE POUR VEHICULE A PEDALES**
SELBSTTÄTIGES GANGSCHALTGETRIEBE FÜR EIN TRETKURBELFAHRZEUG
DIFFERENTIAL SELECTION AUTOMATIC GEAR CHANGE FOR PEDAL VEHICLES

(30) Priorité: 13.09.1994 FR 9410887
(43) Date de publication de la demande: 26.02.1997
(73) Titulaire: Lenoble, Jean-Paul, 75017 Paris (FR)
(72) Inventeur: Lenoble, Jean-Paul, 75017 Paris (FR)
(86) Numéro de dépôt international: FR9501169
(87) Numéro de publication internationale: WO96008405

(56) Documents cités:
- WO-A-95/11156
- FR-A- 830 114
- FR-A- 907 868
- US-A- 5 099 712

## Description

La présente invention concerne un dispositif de changement de vitesse automatique pour véhicule à pédale et plus particulièrement pour bicyclette dans lequel des engrenages établissent tous les rapports de vitesse, l'un d'eux étant automatiquement sélectionné en fonction de la vitesse par des cliquets commandés au moyen de tachymètres mécaniques ou électroniques.

Le brevet français N° 2 711 351 publié le 28.4.95 décrit ce changement de vitesse à sélection différentielle basé sur la différence de vitesse des engrenages et sur l'utilisation de cliquets antiretour auxquels on a adjoint une queue pour permettre leur commande de mise hors fonction. Ces engrenages intérieurs sont composés de pignons intermédiaires et de couronnes dentées dont la circonférence extérieure est taillée en dents de loup. Les couronnes dentées sont libres sur leur axe et sont constamment mises en prise par les mobiles intermédiaires. Grâce aux cliquets agissant sur les dents de loup, elles ne tournent que dans un seul sens et provoquent l'enclenchement des plus grands rapports de façon naturelle par la différence de leur vitesse angulaire. La sélection des vitesses est effectuée par le soulèvement des cliquets au moyen de leur queue. Lorsqu'aucun cliquet n'est soulevé, la boîte se trouve automatiquement sur le plus grand rapport tandis que lorsque tous les cliquets sont soulevés elle se trouve automatiquement sur le plus petit rapport c'est à dire en première. Lorsqu'une couronne donnant une vitesse intermédiaire est en fonction, les couronnes donnant un rapport supérieur tournent librement puisque leurs cliquets ont été soulevés tandis que les couronnes donnant un rapport inférieur décliquettent puisqu'elles tournent moins vite que leurs cliquets. La force nécessaire au soulèvement d'un cliquet étant très faible il peut se faire par des tachymètres mécaniques ou électroniques basculant automatiquement à des seuils de vitesse prédéterminés.

L'invention est définie par les caractéristiques de la revendication 1.

Le mode de réalisation de l'invention est une boîte coaxiale compacte. Elle sera illustrée en référence aux dessins annexés sur lesquels :
La Fig. 1 représente en coupe vue de dessus une réalisation du dispositif incorporé dans le moyeu de la roue arrière de la bicyclette dans un carter étanche et coaxial.
La Fig. 2 représente une vue en plan du dispositif de la Fig. 1
La Fig. 3 représente l'implantation des composants du tachymètre électronique qui commande le dispositif de la Fig. 1
La Fig. 4 est une autre réalisation similaire mais simplifiée du dispositif de la Fig. 1
La Fig. 5 représente un tachymètre mécanique fermé avec son cliquet hors fonction..
La Fig. 6 représente un tachymètre mécanique ouvert avec son cliquet en fonction.

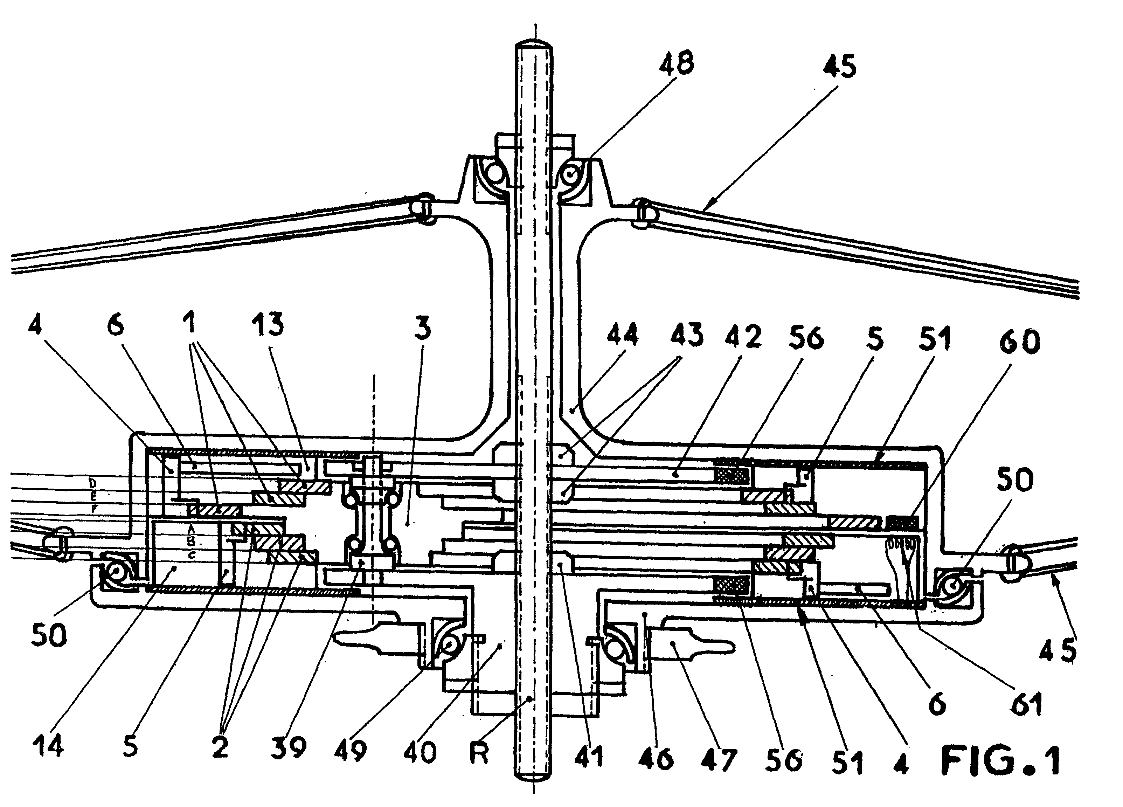

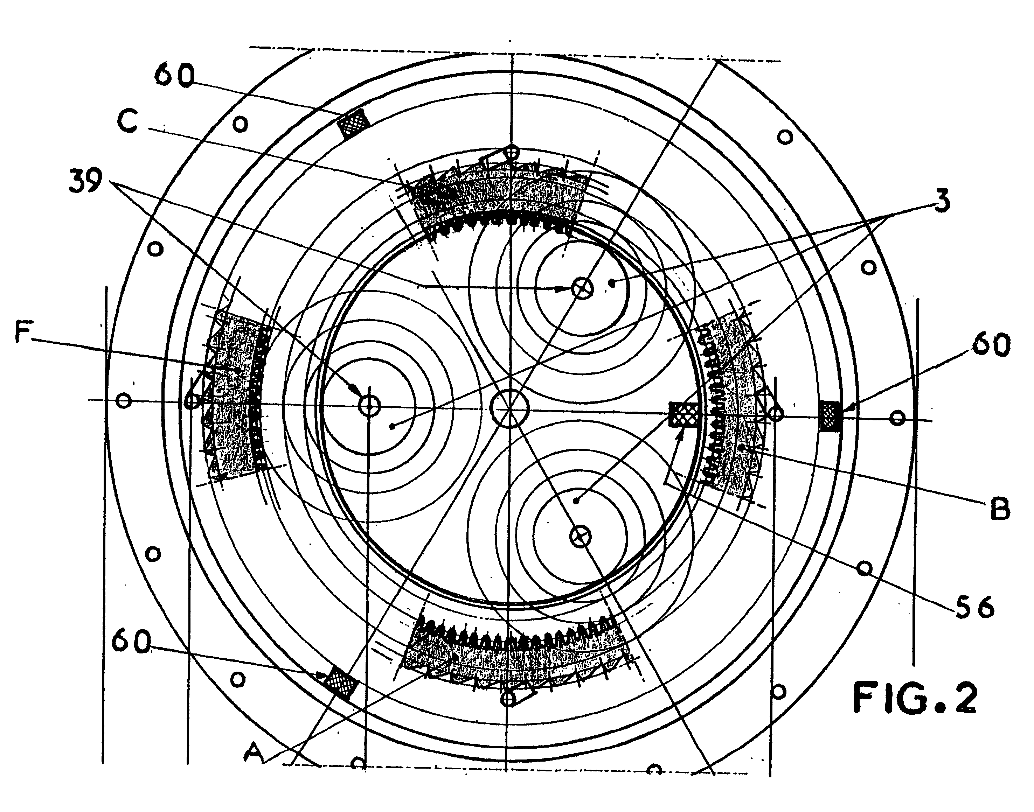

Dans le mode de réalisation coaxial compact représenté sur les figures 1 et 2, une boîte à 9 vitesses est décrite. Elle est composée de deux parties principales. D'une part un boîtier (44), formant le moyeu de la roue, dans lequel est fixé un premier moyeu (13) qui supporte 3 couronnes à denture intérieure (1) en rotation libre sur les 3 niveaux D, E et F. D'autre part une platine motrice tournante (46) entraînée directement par le pédalier au travers de la chaîne de transmission et du pignon de chaîne (47) dans laquelle est fixé un deuxième moyeu (14) qui supporte 3 couronnes à denture intérieure (2) en rotation libre sur les 3 niveaux A, B et C. Ces six couronnes sont coaxiales à l'axe R de la roue.

Entre ces deux parties, un mobile intermédiaire (3) est disposé à l'intérieur des six couronnes dentées (1, 2), et engrène avec elles. Il est composé de six pignons empilés les uns sur les autres, solidaires entre eux et montés à roulement à billes sur un axe (39). Pour lui permettre de résister au couple important qu'il doit transmettre, il est reproduit en deux ou trois exemplaires identiques comme on le voit sur la figure 2. Ainsi l'effort transmis par une dent de l'engrenage est fortement diminué. Les trois axes (39) des mobiles intermédiaires (3), sont fixés sur un flasque (40). Ce dernier est lui-même vissé sur l'axe fixe R de la roue arrière et bloqué par un contre écrou (41). Un second flasque (42) est également bloqué sur l'axe fixe R de la roue par deux contre écrous (43) et maintient l'extrémité des trois axes (39) formant ainsi une cage rigide et fortement solidaire de l'axe fixe R de la roue et donc de la fourche arrière de la bicyclette.

Le boîtier (44) et la platine tournante (46) enferment cet ensemble et constituent le moyeu de la roue. Ils tournent sur l'axe fixe R de la roue par deux roulements à billes (48, 49) dont les cuvettes sont opposées et s'appuient l'un sur l'autre en tournant par un grand roulement à billes (50). Le boîtier (44) supporte vers l'extérieur les rayons (45) de la roue. La platine motrice (46) supporte à l'extérieur un pignon à roue libre (47) qui reçoit la chaîne de transmission.

Les couronnes dentées (1, 2) sont également taillées avec des dents de loup sur leur pourtour extérieur. Des cliquets (4, 5) s'engagent dans ces dents de loup et permettent aux couronnes de tourner dans un seul sens. Sur la figure 2 sont partiellement représentées dans l'ordre croissant les quatre couronnes dentées des niveaux C, B, A et F vues en plan avec leur cliquet. Les deux autres couronnes ne sont pas représentées pour ne pas surcharger le dessin mais on voit que le sens du cliquet F est inversé car les cliquets D, E et F sont des cliquets menés par leurs couronnes alors que les cliquets A, B et C sont menants. On y voit également la disposition de trois mobiles intermédiaires (3) seulement représentés pour la même raison par les diamètres primitifs des quatre pignons qu'ils comportent.

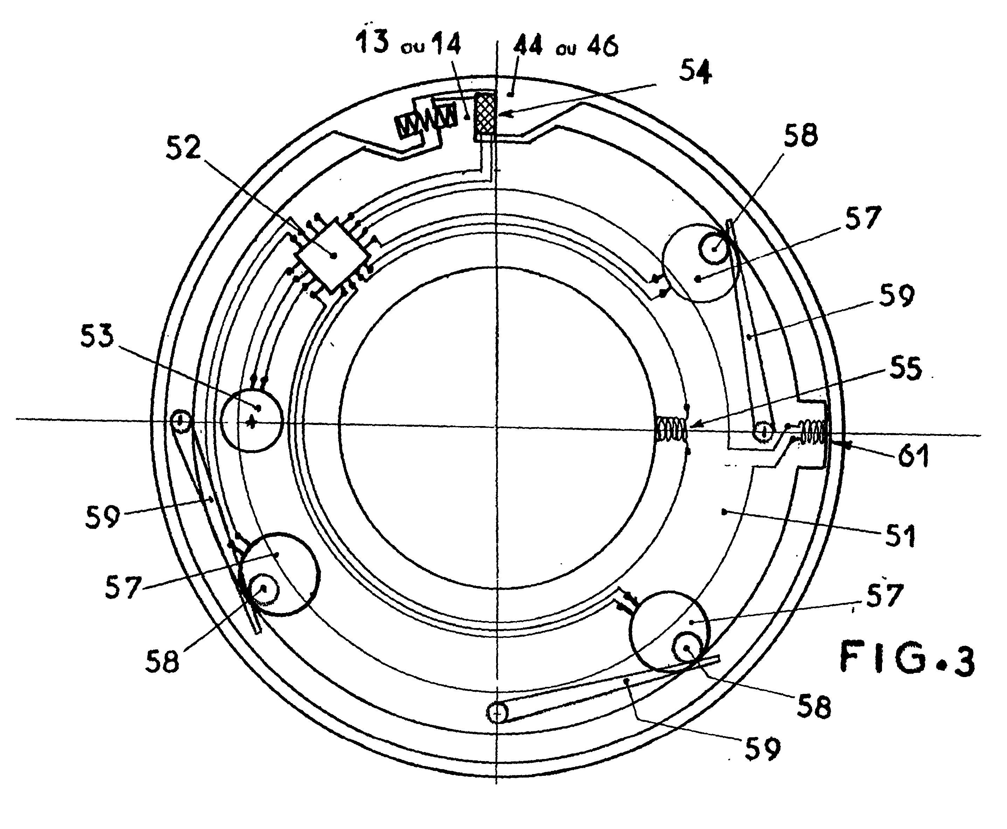

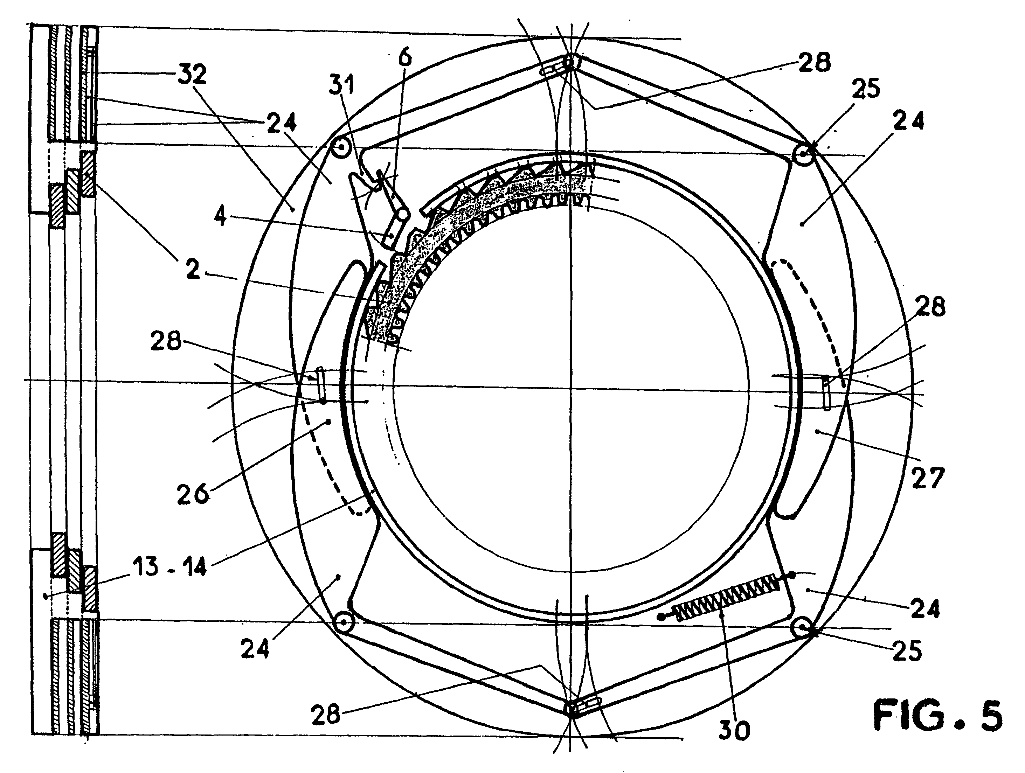

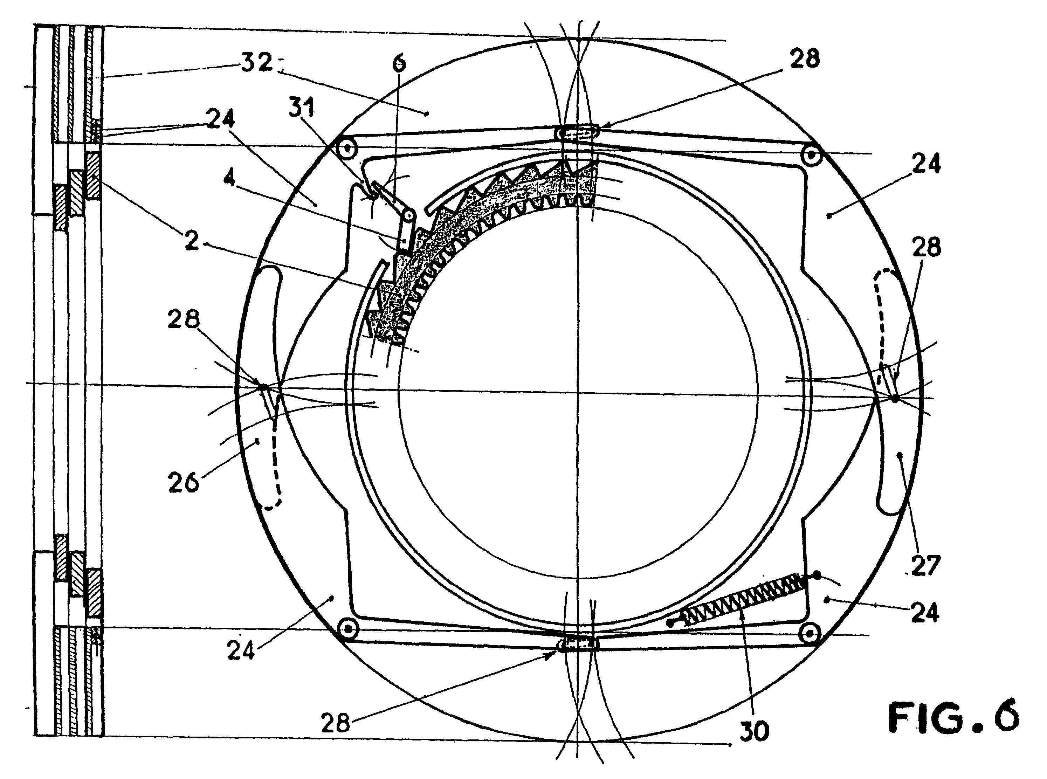

Les cliquets commandés (4) des niveaux B, C, E et F sont équipés d'une queue (6) pour permettre de les actionner par des tachymètres électroniques (51) représentés sur la figure 3 ou mécaniques représentés sur les figures 5 et 6. Les cliquets (5) n'ont pas de queue car ils correspondent aux niveaux A et D et fonctionnent avec les couronnes donnant les plus petits rapports. Ils n'ont donc pas besoin d'être commandés.

Sur la figure 3 un tachymètre électronique est représenté. Sur un circuit imprimé (51) les composants électroniques suivants sont implantés : Un microprocesseur (52) est alimenté par une pile (53) et reçoit les impulsions d'un capteur compte tours (55) dont les aimants permanents (56) sont visibles sur les figures 1 et 2. Grâce à son garde temps incorporé le microprocesseur calcule la vitesse des mobiles en divisant le nombre de tours par le temps.. Un capteur de couple composé d'un quartz piézo-électrique (54) permet de mesurer la force appliquée sur les pédales. Il est placé entre un bossage de la boîte (44) et un bossage opposé du moyeu (13) de telle façon que ce dernier, fixé dans la boîte avec un certain jeu, transmette la force motrice à la boîte et donc à la roue tout en comprimant le quartz. Cette variation de pression dans le quartz permet de moduler, en fonction du couple, le courant électrique qui le traverse. Le microprocesseur utilise cette modulation pour modifier les seuils de passage des vitesses mis en mémoire. Il les compare périodiquement aux vitesses atteintes et distribue les impulsions de commande aux 3 moteurs bipolaires (57) qui par la position d'un excentrique (58) agissant sur la queue des cliquets (59) permettent de mettre ces cliquets en fonction ou hors fonction.

Dans ce mode de réalisation à deux trains d'engrenages, il est nécessaire de placer un tachymètre sur chacun d'eux pour mesurer la vitesse atteinte par leurs engrenages menés. Du coté de la roue les premières couronnes dentées (1) sont des engrenages menés comme on le voit Figure 1. Le premier tachymètre (51) est donc placé entre le premier moyeu (13) et le boîtier (44) et l'aimant permanent du capteur compte-tours est placé sur le flasque (42) de la cage de l'axe fixe. Du coté de la platine motrice (46) les deuxièmes couronnes dentées (2) sont des engrenage menants. Les engrenages menés sont les trois pignons du mobile intermédiaire qui engrènent avec elles. Or, dans cette disposition très compacte, il n'est pas possible de placer un tachymètre dans ce mobile par ailleurs inaccessible. Le deuxième tachymètre est donc placé entre le deuxième moyeu (14) et la platine motrice (46), de façon symétrique au premier, et entre lesquels on peut installer le capteur de couple (54). L'aimant permanent du compte-tours est placé sur le flasque (40) de la cage de l'axe fixe. Mais si l'on place ainsi le deuxième tachymètre sur un mobile menant, on perd la capacité de déterminer laquelle des trois couronnes il faut sélectionner. Il est donc nécessaire de fournir au microprocesseur une information supplémentaire en plaçant un deuxième capteur compte-tours entre le premier moyeu (13) qui porte trois aimants (60) et le deuxième moyeu (14) qui porte le solénoïde capteur (61). Par ce montage on obtient la vitesse relative du moyeu (14) par rapport au moyeu (13) multipliée par trois (grâce aux trois aimants) de façon à toujours obtenir des chiffres positifs et supérieurs à la vitesse des couronnes (2) de la platine motrice.

Pour obtenir sur ces 9 vitesses des développements régulièrement répartis, par exemple de 2,80 à 8 mètres, on peut choisir les couronnes dentées (CD 1 et CD 2) et les pignons correspondants des mobiles intermédiaires (MI 1 et MI 2) suivant le tableau 1 ci-dessous :

**Tableau 1 :**

| Diamètres primitifs et rapports pour 9 vitesses | | | | | |
|---|---|---|---|---|---|
| Niveaux | Diamètres primitifs CD 2 / MI 2 | Rapports | Niveaux | Diamètres primitifs MI 1 / CD 1 | Rapports |
| A | 120 42 | 2,8571 | D | 21 99 | 0,2121 |
| B | 111 33 | 3,3636 | E | 33 111 | 0,2973 |
| C | 105 27 | 3,8889 | F | 63 141 | 0,4468 |

En combinant par le jeu des cliquets commandés les trois rapports A, B et C de la platine motrice et les trois rapports D, E et F de la roue on réalise les 9 rapports de boîte présentés sur le tableau 2 ci-dessous:

**Tableau 2:**

| Rapports, développement et vitesses obtenus pour un seuil de changement au pédalier choisi à 60 tours / minute. Rapport de transmission par la chaîne de 2,2. Roue de 700 développement 2,10 mètres. | | | | | | |
|---|---|---|---|---|---|---|
| Vitesses | Rapport boîte | Dévelop. en mètres | Vitesses en tours/minute | | | Km/h aux seuils |
| | | | Aux seuils de changement | | Après changement sur pédalier | |
| | | | Roue | Compte tours (61) | | |
| 1ère AxD | 0,6061 | 2,80 | 80,00 | 316,00 | 50,97 | 10,08 |
| 2ème BxD | 0,7135 | 3,30 | 94,18 | 301,82 | 51,90 | 11,87 |
| 3ème CxD | 0,8248 | 3,81 | 108,89 | 281,11 | 54,27 | 13,72 |
| 4ème AxE | 0,8494 | 3,92 | 112,12 | 283,88 | 50,97 | 14,13 |
| 5ème BxE | 1,0000 | 4,62 | 132,00 | 264,00 | 51,80 | 16,63 |
| 6ème CxE | 1,1562 | 5,34 | 152,61 | 243,39 | 54,34 | 19,23 |
| 7ème AxF | 1,2766 | 5,90 | 168,51 | 227,49 | 50,97 | 21,23 |
| 8ème BxF | 1,5029 | 6,94 | 198,38 | 197,62 | 51,90 | 25,00 |
| 9ème CxF | 1,7376 | 8,03 | 229,36 | | | |

On voit sur le tableau 2 que lorsque le pédalier atteint le seuil de vitesse choisi de 60trs/min en 1ère et provoque le passage au rapport de la 2ème, sa vitesse rétrograde à 50,97trs/min Pour chaque rapport la vitesse du pédalier rétrograde donc de 60trs/min à environ 51trs/min. après le changement. A 60trs/min la vitesse des couronnes dentées (2) de la platine motrice mesurée par le compte-tours (56) est de 132 trs/min en raison du rapport de transmission par chaîne choisi à 2,2 (60 x 2,2 = 132). Simultanément le compte-tours (61) mesure 316 ((132 x 3) - 80 = 316). C'est la conjonction de ces deux valeurs qui indique au microprocesseur quelle est la combinaison des positions de cliquets qu'il faut provoquer. Les 9 seuils qui doivent être mis en mémoire dans le deuxième tachymètre électronique du coté de la platine motrice sont donc 132 et les 8 chiffres de la colonne 'Compte-tours (61)' tandis que dans le premier tachymètre électronique du coté de la roue il faut mettre en mémoire les 9 chiffres de la colonne 'Roue'

Cette boîte de vitesse fonctionne de la façon suivante : Lorsque le pignon (47) est entraîné par la chaîne, il fait tourner la platine motrice (46), le moyeu (14) et les couronnes dentées (2). L'une des couronnes se trouvant embrayée par son cliquet, elle entraîne les mobiles intermédiaires par le pignon correspondant. Ces derniers entraînent les couronnes dentées (1) mais seulement l'une d'entre elles entraîne le moyeu (13) par le cliquet sélectionné, les autres couronnes tournant librement ou décliquetant selon leur rapport d'engrenage. En fonction des informations données par les capteurs compte-tours (56, 61), les microprocesseurs (52) des deux tachymètres calculent les vitesses obtenues et les comparent à celles mises en mémoire pour déclencher le changement de position des cliquets.

La description de ce dispositif a été faite en utilisant des tachymètres électroniques. Or nous avons vu précédemment que le simple soulèvement d'un cliquet dont le ressort de rappel a une force de quelques grammes suffit à provoquer le changement de rapport. Cette opération demandant très peu d'énergie, il est tout à fait possible de la faire effectuer par un instrument d'ordinaire utilisé à la mesure de vitesses de rotation tel qu'un tachymètre mécanique.

Sur les figures 5 et 6 est représenté un tachymètre mécanique basé sur le principe de masselottes s'écartant sous l'effet de la force centrifuge. Si on le place directement au niveau des couronnes dentées dont les cliquets doivent être commandés on peut utiliser un tachymètre simplifié qui ne donne pas une mesure mais qui bascule brusquement lorsqu'il atteint un seuil de vitesse prédéterminée. Pour ne pas surcharger le dessin seulement quelques dents d'engrenage et quelques dents de loup de la couronne ont été représentées pour montrer l'engagement du cliquet (4) dans les dents de loup.

Ce tachymètre étant coaxial à l'axe de la roue et donc tournant dans un plan vertical, il est nécessaire de le compenser en éliminant toutes les forces parasites créées par cette disposition. Ce sont celles de la pesanteur dont l'effet est inversé aux points morts haut et bas, celles des cahots de la route dont l'effet est vertical, celles d'une accélération ou d'une décélération due à un coup de frein brutal dont l'effet est horizontal. Ce tachymètre est composé de quatre masselottes (24) pivotant sur quatre axes (25) et prolongées de l'autre coté de ces axes par quatre leviers de connexion. Elles sont disposées de telle façon qu'elles s'assemblent en deux masses (26, 27) diamétralement opposées. Les masselottes et les leviers sont connectés entre eux par quatre goupilles coulissant dans quatre fentes (28) ce qui permet d'obtenir leur rotation parfaitement simultanée. L'écartement des deux masses (26, 27) sous l'effet de la force centrifuge est donc également simultané tandis que les effets des forces parasites qui agissent sur chacune d'elles mais en sens contraire se trouvent complètement annulés.

Les masselottes sont rappelées par un ressort (30) taré pour obtenir l'ouverture de chacun des tachymètres au seuil de vitesse qui lui correspond. Dans la position fermée représentée sur la figure 5, un doigt (31) soulève la queue (6) du cliquet (4) et le maintient hors de la trajectoire des dents de loup le mettant donc hors fonction. La couronne (2) peut alors tourner librement. Lorsque le tachymètre atteint une vitesse suffisante, l'inertie des masselottes crée une force centrifuge supérieure à la force du ressort (30) et provoque leur écartement. Dés que cet écartement a commencé la force centrifuge augmente et accélère le mouvement jusqu'à l'ouverture complète. Le doigt (31) relâchant alors la queue (6) du cliquet, le laisse de nouveau pénétrer dans la trajectoire des dents de loup ce qui le remet en fonction comme représenté sur la figure 6. C'est un système à deux positions stables ce qui permet d'avoir un passage des vitesses franc et rapide. Bien entendu ce tachymètre sera inversé selon qu'il sera monté du coté roue où la couronne est menante ou bien du coté platine tournante où elle est menée par le cliquet.

On peut décrire le fonctionnement d'une boîte par exemple à quatre vitesses de la façon suivante: à l'arrêt, les masselottes des deux tachymètres étant fermées en position de repos leurs cliquets sont hors fonction et l'on se trouve sur le plus petit rapport. Au démarrage en 1ère, la roue et la platine tournante ont toutes deux une rotation lente. Puis la platine tournante atteint la vitesse de rotation suffisante pour déclencher l'écartement de ses masselottes et le passage de la 2ème. La vitesse de la bicyclette s'accélérant encore c'est le tour du tachymètre de la roue d'entrer en action provoquant un ralentissement suffisant de la platine motrice pour qu'elle repasse à un engrenage de plus petit rapport. donnant ainsi la 3ème. Enfin la vitesse de pédalage et celle de la roue étant toutes les deux suffisantes pour maintenir les masselottes des deux tachymètres collées vers l'extérieur, on atteint la 4ème et l'on y reste tant que cette vitesse peut être maintenue.

Si le cycliste cesse de pédaler alors qu'il roule à grande vitesse; par exemple en descente, le tachymètre de la platine tournante va inutilement commander la mise hors fonction de son cliquet puisqu'elle s'arrête de tourner mais dès que le pédalage reprend, le cliquet reprend également sa position. Il est très probable que le cycliste ne s'en apercevra même pas.

Pour la décélération le processus inverse se déroule, mais cette fois-ci l'effort de dégagement du cliquet va se produire justement sur celui qui se trouve en prise. Si cette décélération est volontaire, par exemple lors d'un freinage, le cycliste cesse de pédaler et le cliquet peut se dégager sans difficulté. Par contre si le ralentissement est involontaire, par exemple dans une côte alors que le cycliste continue de pédaler en force pour maintenir sa vitesse, le cliquet en prise dans la dent de loup pourra y rester bloqué jusqu'à ce que la pression qui s'exerce sur lui diminue suffisamment, soit au moment du passage des points morts du pédalier soit par un relâchement volontaire et momentané de la pression sur les pédales.

Cette remarque n'est d'ailleurs pas spéciale au tachymètre mécanique. Elle est valable pour les autres modes de réalisation. On remarquera également que le système classique du dérailleur ne peut pas non plus transmettre la poussée pendant toute la durée du déraillement de la chaîne qui dans ce cas est une opération beaucoup plus longue.

### BOITES COAXIALES SIMPLIFIEES

On réalise un dispositif simplifié en supprimant les tachymètres et les cliquets de la platine motrice et en remplaçant les deuxièmes couronnes (2) par une seule couronne dentée sans dents de loup et directement vissée sur la platine motrice (46). Les premières couronnes dentées (1) seront alors les seules à assurer les différents rapports de la boîte comme cela se produit pour les dérailleurs n'ayant qu'un seul plateau. On voit sur la figure 1 qu'en supprimant tous ces mobiles on peut obtenir un dispositif plus plat.

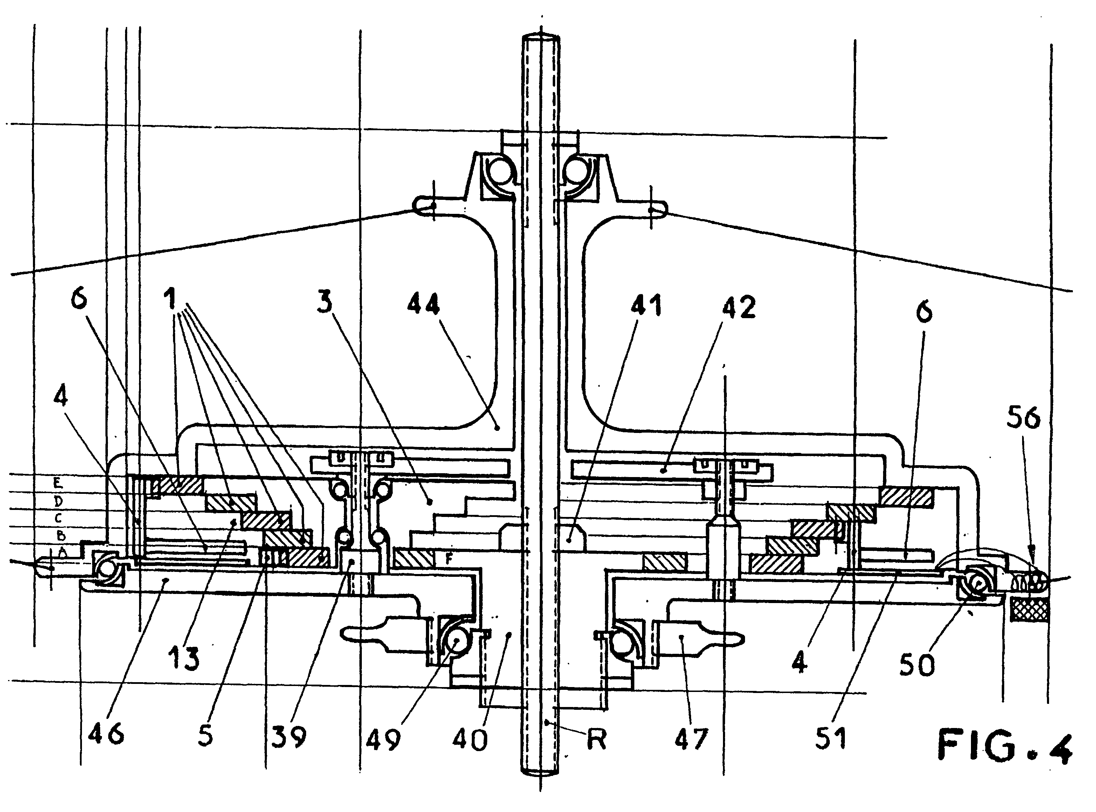

On peut également obtenir un dispositif simplifié mais encore plus plat en faisant tourner les trois mobiles intermédiaires (3) en satellites autour de l'axe fixe de la boîte. On voit sur la figure 4 une boîte à cinq vitesses suivant ce principe. Les trois mobiles sont fixés par leur axe (39) directement sur la platine motrice (46) et sont donc entraînés en satellites autour du flasque (40) fixé sur l'axe fixe R de la roue, et dans lequel sont taillées les dents du premier engrenage F. Dans leur mouvement en satellite les trois mobiles intermédiaires sont entraînés en rotation sur eux-mêmes par la rotation de la platine motrice. Au même niveau mais à l'extérieur, la couronne dentée (1) du niveau A engrène avec le même pignon du satellite. On gagne donc l'épaisseur d'un niveau d'engrenage. Autour des pignons des satellites se trouvent les cinq couronnes dentées (1). Elles sont coaxiales et supportées par le moyeu (13) lui-même fixé dans le boîtier (44). Comme précédemment dans ce moyeu sont placés le cliquet (5) normal du niveau A et les quatre cliquets commandés (4) des niveaux B C D et E. Si l'on adopte un automatisme mécanique il faudra placer quatre tachymètres mécaniques en face de leur couronne. Si l'on adopte un tachymètre électronique il faudra le placer entre le moyeu (13) et la platine motrice muni de quatre moteurs bipolaires pour commander les cliquets.

Dans ces modèles simplifiés on a éliminé toutes les commandes coté pédalier pour ne conserver que les commandes coté roue ce qui est une simplification importante. En contrepartie avec cinq couronnes on ne peut obtenir que cinq vitesses alors que le système double permet d'obtenir neuf vitesses avec six couronnes.

Pour obtenir sur ces 5 vitesses des développements régulièrement répartis, par exemple de 3,70 à 8;35 mètres, on peut choisir les couronnes dentées (CD 1 et CD 2) et les pignons correspondants des mobiles intermédiaires (MI 1 et MI 2) suivant le tableau ci-dessous:

**Tableau 3 :**

| Diamètres primitifs et rapports pour cinq vitesses. | | | | | |
|---|---|---|---|---|---|
| Niveaux | Diamètres primitifs MI 1 / CD 1 | Rapports | Niveaux | Diamètres primitifs CD 2 / MI 2 | Rapports |
| A | 18 150 | 0,1200 | F | 114 18 | 6,3333 |
| B | 24 156 | 0,1538 | | | |
| C | 33 165 | 0,2000 | | | |
| D | 57 189 | 0,3016 | | | |
| E | 117 249 | 0,4699 | | | |

Le mobile intermédiaire tournant en satellite, en multipliant le rapport F par chacun des rapports des niveaux A B C D E et en ajoutant 1 (soit (AxF)+1 puis (BxF)+1 .etc.) on réalise les cinq rapports de boîte présentés dans le tableau 4 ci-dessous:

**Tableau 4 :**

| Rapports, développements et vitesses pour un seuil de changement au pédalier choisi à 60 tours/minute. | | | | | |
|---|---|---|---|---|---|
| Vitesses | Rapports boîte | Dévelop. en mètres | Vitesses en tours/minute | | Km/h aux seuils |
| | | | Aux seuils de changement Roue | Après Changement Pédalier | |
| 1ère (AxF)+1 | 1,7600 | 3,70 | 105,60 | 52,49 | 13 |
| 2ème (BxF)+1 | 1,9744 | 4,15 | 118,46 | 52,26 | 15 |
| 3ème (CxF)+1 | 2,2667 | 4,76 | 136,00 | 46,73 | 17 |
| 4ème (DxF)+1 | 2,9101 | 6,11 | 174,60 | 43,92 | 22 |
| 5ème (ExF)+1 | 3,9759 | 8,35 | | | |

Quatre seuils de changement sont nécessaires et sont indiqués dans la colonne 'Roue', Si l'on équipe ce dispositif de tachymètres mécaniques, il en faudra quatre : un pour chacun des cliquets commandés. Si le tachymètre électronique est utilisé, il n'en faudra qu'un équipé de quatre moteurs à aimant bipolaire.

Une autre disposition de ce type de boîte de vitesse coaxiale, qu'elle soit simplifiée ou non, consiste à la monter sur l'axe du pédalier, la chaîne de transmission étant alors placée entre la boîte et la roue. L'une des pédales est fixée sur la platine motrice solidarisée sur l'axe du pédalier par la clavette classique tandis que le boîtier mené supporte le plateau qui reçoit la chaîne de transmission de la force motrice vers un pignon de chaîne fixé sur le moyeu de la roue. Le flasque (40) qui supporte les trois mobiles intermédiaires est fermement fixé au moyeu du pédalier ou si les mobiles intermédiaires travaillent en satellites il supportera la roue dentée F.

Les différents tableaux de chiffres et les dispositifs décrits, donnés à titre d'exemple non limitatifs, illustrent certaines possibilités d'application de l'invention mais il est évident que d'autres calculs de boîte, d'autres modes de réalisation ou d'autres combinaisons de ces systèmes peuvent être envisagées.

## Revendications

1. Dispositif de changement de vitesse pour vehicule à pédales et plus particulièrement pour bicyclette, dans lequel toutes les couronnes dentées (1, 2) donnant les rapports de vitesse sont mises en prise par un mobile intermédiaire (3), sont montées libres sur leur axe et sont équipées de cliquets antiretours (4, 5) agissant sur l'autre côté des couronnes taillées en dents de loup, les cliquets (4) étant équipés d'une queue (6) par laquelle ils sont maintenus hors de la trajectoire des dents de loup, leur mise hors fonction étant obtenue par la commande entièrement automatique d'un tachymètre. mécanique compensé ou d'un tachymètre électronique, cet ensemble étant **caractérisé en ce que** les couronnes dentées (1, 2) sont placées de façon coaxiale à l'axe de la roue avec des dentures d'engrenage taillées sur leur circonférence interieure tandis que des dentures en dents de- loup sont taillées sur leur circonférence extérieure, le mobile intermédiaire (3) étant placé à l'intérieur de ces couronnes dentées avec lesquelles il engrène tandis que les cliquets antiretours (4, 5) et les tachymètres mécaniques ou electroniques sont placés à l'extérieur des couronnes dentées dans leurs moyeux (13, 14).

2. Dispositif selon la revendication 1 **caractérisé en ce que** le mobile intermédiaire (3) est répété en trois exemplaires identiques à l'intérieur des couronnes dentées de façon à permettre aux dentures d'engrenage de supporter le couple moteur, ces mobiles étant montés libres sur trois axes fixés fermement sur le flasque (40), lui-même fermement immobilisé par rapport l'axe fixe de la roue et à la fourche arrière de la bicyclette.

3. Dispositif selon les revendications 1 et 2 **caractérisé en ce que** l'ensemble du mécanisme est contenu dans deux boîtiers rigides qui forment le moyeu de la roue, coaxiaux aux couronnes dentées (1) et (2) qui tournent l'un par rapport à l'autre pour former un carter étanche, le premier boîtier (44) 'contenant le moyeu (13) dans lequel tournent les couronnes dentées (1) moyeu qui supporte les tachymètres (51) et les cliquets (4) et (5) de ces couronnes, le second boîtier (46) contenant le moyeu (14) dans lequel tournent les couronnes dentées (2), moyeu qui supporte les tachycmètres (51) et les cliquets (4)' et (5) de ces couronnes, ces deux boîtiers (44) et (46) étant poussés l'un vers l'autre par les deux roulements à billes (48) et (49) dont les cuvettes sont opposées pour ratrapper le jeu et s'appuyant l'un sur l'autre en tournant grâce au grand roulement à billes (50).

4. Dispositif selon les revendications 1, 2 et 3 **caractérisé en ce que** le tachymètre électronique des couronnes dentées (2) côté pédalier comporte deux compte-tours (56, 61), l'un permettant de mesurer la vitesse absolue du moyeu (14) par rapport à la platine (40) fixe et l'autre permettant de mesurer la vitesse relative du moyeu (14) par rapport au moyeu (13), la conjonction de ces deux vitesses indiquant au microprocesseur quels sont les rapports à sélectionner.

5. Dispositif selon les revendications 1, 2 et 3 **caractérisé en ce que** les couronnes dentées (2) sont remplacées par une couronne dentée sans dents de loup fixée sur le boîtier (46) tandis que les tachymètres et les cliquets côté pédalier sont supprimés formant ainsi un dispositif simplifié dans lequel seules les couronnes dentées (1) côté roue assurent les différents rapports.

6. Dispositif selon les revendications 1, 2 et 3 **caractérisé en ce que** les trois mobiles intermédiaires sont montés libres sur trois axes fixés fermement sur la face interne du boîtier (46), tournant ainsi en satellite en engrenant sur la partie dentée taillée dans le flasque fixe (40) et en s'appuyant dessus pour transmettre la force motrice aux couronnes dentées (1) à l'interieur desquelles ils engrennent, ces couronnes elles-mêmes supportées par le moyeu (13), formant ainsi un dispositif simplifié dans lequel les couronnes (2) et leur commandes ont été supprimées du côté du pédalier.

7. Dispositif selon les revendications 1, 2 et 3 dans lequel la manoeuvre des cliquets commandés est effectuée de façon entièrement automatique par des tachymétres mécaniques **caractérisé en ce qu'**ils sont compensés de façon à ne tenir compte uniquement que de la force centrifuge grâce à quatre masselottes (26) et (27) diamétralement opposées, montées sur quatre équerres (24) pivotant dans un plan perpendiculaire à l'axe de la roue et connectées entre elles par les goupilles (28) de façon à ce que les masselottes s'écartent ou se rapprochent simultanément du centre de rotation, éliminant ainsi toutes les forces parasites non liées à la force centrifuge.

8. Dispositif selon les revendications 1, 2, 3, 4, 5, 6, 7 et 8 **caractérisé en ce que** tout le système coaxial incorporé dans les boîtiers tournants (44) et (46) est monté sur l'axe de la roue, le boîtier tournant (44) supportant alors les rayons (45) de la roue arrière de la bicyclette tandis que le boîtier (46) supporte un pignon fixe (47) qui reçoit la chaîne de transmission de la force motrice depuis le pédalier, ces deux boitiers constituant ensemble le moyeu de la roue.

9. Dispositif selon les revendications 1, 2, 3, 4, 5, 6, 7 et 8 **caractérisé en ce que** tout le système coaxial incorporé dans les boîtiers tournants (44) et (46) est monté sur l'axe du pédalier, la pédale droite étant fixée sur le boîtier menant à la place du pignon fixe (47) et le plateau de la chaîne sur le boîtier mené à la place des rayons, la roue arrière de la bicyclette étant alors simplement équipée d'un pignon fixe de transmission par chaîne.

## Patentansprüche

1. Gangschaltgetriebe für ein Tretkurbelfahrzeug und insbesondere für ein Fahrrad, bei dem alle Zahnkränze, die die Gänge ergeben, durch ein Zwischendrehteil (3) ineinander greifen, frei auf ihrer Achse befestigt und mit Rücklaufsperrklinken (4, 5) ausgerüstet sind, die auf der anderen Seite der mit Sperrzähnen geschnittenen Zahnkränze einwirken, wobei die Sperrklinken (4) mit einem Endstück (6) ausgerüstet sind, mit dem sie außerhalb der Bahn der Sperrzähne gehalten werden, wobei ihre Außerbetriebsetzung durch die zur Gänze automatische Steuerung eines mechanischen kompensierten Tachometers oder eines elektronischen Tachometers erhalten wird, wobei diese Gesamtheit **dadurch gekennzeichnet ist, dass** die Zahnkränze koaxial zur Achse des Rades angeordnet sind und auf ihrem Innenumfang eine Antriebsverzahnung aufweisen, während auf ihrem Außenumfang eine Sperrverzahnung eingeschnitten ist, wobei das Zwischendrehteil (3) im Inneren dieser Zahnkränze angeordnet ist, in die es eingreift, während die Rücklaufsperrklinken (4, 5) und die mechanischen oder elektronischen Tachometer außerhalb der Zahnkränze in ihren Naben (13, 14), angeordnet sind.

2. Gangschaltgetriebe nach Anspruch 1, **dadurch gekennzeichnet, dass** das Zwischendrehteil (3) in drei identischen Ausführungen im Inneren der Zahnkränze derart wiederkehrt, um es den Antriebsverzahnungen zu ermöglichen, das Antriebsmoment zu übertragen, wobei diese Drehteile frei auf drei, auf dem Flansch (40) feststehenden Achsen befestigt sind, welcher selbst in Bezug auf die feststehende Achse des Rades und die hintere Fahrradgabel unbeweglich ist.

3. Gangschaltgetriebe nach den Ansprüchen 1 und 2, **dadurch gekennzeichnet, dass** die Gesamtheit des Mechanismus in zwei starren Gehäusen die die Radnabe bilden, zu den Zahnkränzen (1) und (2) koaxial untergebracht ist, die sich zueinander drehen, um ein geschlossenes Gehäuse zu bilden, wobei das erste Gehäuse (44) die Nabe (13) enthält, in der sich die Zahnkränze (1) drehen, eine Nabe, die die Tachometer (51) und die Sperrklinken (4) und (5) dieser Kränze trägt, wobei das zweite Gehäuse (46) die Nabe (14) umfasst, in der sich die Zahnkränze (2) drehen, eine Nabe, die die Tachometer (51) und die Sperrklinken (4) und (5) dieser Kränze trägt, wobei diese beiden Gehäuse (44) und (46) durch die beiden Kugellager (48) und (49) zueinander verschoben werden, deren Wannen einander gegenüberliegen, um das Spiel zu verringern, und sich gegeneinander aufzustützen, indem sie sich dank des großen Kugellagers (50) drehen.

4. Gangschaltgetriebe nach den Ansprüchen 1, 2 und 3, **dadurch gekennzeichnet, dass** der elektronische Tachometer der Zahnkränze (2) auf der Tretkurbelseite zwei Drehzahlmesser (56, 61) umfasst, wobei einer die Messung der Absolutgeschwindigkeit der Nabe (14) in Bezug auf die feststehenden Flansch (40) und der andere die Messung der Relativgeschwindigkeit der Nabe (14) in Bezug auf die Nabe (13) ermöglicht, wobei die Verbindung dieser beiden Geschwindigkeiten dem Mikroprozessor anzeigt, welche Gänge auszuwählen sind.

5. Gangschaltgetriebe nach den Ansprüchen 1, 2 und 3, **dadurch gekennzeichnet, dass** die Zahnkränze (2) durch einen Zahnkranz ohne Sperrverzahung ersetzt sind, der auf dem Gehäuse (46) befestigt ist, während die Tachometer und die tretkurbelseitigen Sperrklinken weggelassen sind, wodurch sich ein vereinfachtes Gangschaltgetriebe ergibt, bei dem nur die radseitigen Zahnkränze (1) die verschiedenen Gänge gewährleisten.

6. Gangschaltgetriebe nach den Ansprüchen 1, 2 und 3, **dadurch gekennzeichnet, dass** die drei Zwischendrehteile frei auf drei feststehend auf der Innenseite des Gehäuses (46) befestigten Achsen montiert sind und sich somit wie ein Planetenrad drehen, indem sie in den verzahnten Teil des festen Flansches (40) eingreifen und sich daran abstützen, um die Antriebskraft auf die Zahnkränze (1) zu übertragen, in deren Innenumfang sie eingreifen, wobei diese Kränze, die selbst von der Nabe (13) getragen werden, auf diese Weise ein vereinfachtes Gangschaltgetriebe bildend, bei dem die Kränze (2) und ihre Steuerungen auf der Tretkurbelseite weggelassen sind.

7. Gangschaltgetriebe nach den Ansprüchen 1, 2 und 3, bei dem die Betätigung der gesteuerten Sperrklinken vollständig automatisch durch mechanische Tachometer erfolgt, **dadurch gekennzeichnet, dass** sie derart kompensiert sind, um nur die Fliehkraft durch vier diametral gegenüberliegende Fliehgewichte (28) und (27) zu berücksichtigen, die auf vier Winkelteilen (24) befestigt sind, die in einer Ebene senkrecht zur Achse des Rades schwenken und miteinander durch Stifte (28) verbunden sind, so dass sich die Fliehgewichte gleichzeitig vom Drehmittelpunkt entfernen oder sich diesem annähern, wodurch alle nicht mit der Fliehkraft verbundenen Nebenkräfte beseitigt werden.

8. Gangschaltgetriebe nach den Ansprüchen, 1, 2, 3, 4, 5, 6, 7 und 8, **dadurch gekennzeichnet, dass** das gesamte, in die drehbaren Gehäuse (44) und (46) eingegliederte Koaxialsystem auf der Radachse montiert ist, wobei das drehbare Gehäuse (44) nun die Speichen (45) des Hinterrades des Fahrrades trägt, während das Gehäuse (46) ein feststehendes Kitzel (47) trägt, das die Übertragungskette für die Antriebskraft von der Tretkurbel aufnimmt, wobei diese beiden Gehäuse gemeinsam die Radnabe bilden.

9. Gangschaltgetriebe nach den Ansprüchen 1, 2, 3, 4, 5, 6, 7 und 8, **dadurch gekennzeichnet, dass** das gesamte in die drehbaren Gehäuse (44) und (46) eingegliederte Koaxialsystem auf der Tretkurbelachse montiert ist, wobei die rechte Tretkurbel an dem treibenden Gehäuse an Stelle des festen Ritzels (47) und die Platte der Kette an dem getriebenen Gehäuse an Stelle der Speichen befestigt ist, wobei das Hinterrad des Fahrrades nun einfach mit einem festen Übertragungsritzel für die Kette ausgestattet ist.

## Claims

1. A gearshift device for pedal vehicle and more particularly for bicycle, wherein all the annular gears (1, 2) that generate the speed ratios are thrown into gear by an intermediate mobile (3), are mounted free on their axle and are fitted with reverse-lock ratchets (4, 5) acting on the other side of the sharp-toothed gears, whereas the ratchets (4) are fitted with a tail (6) by which they are held outside the path of the sharp teeth, whereas they are put out of operation by the fully automatic control of a compensated mechanical tachometer or an electronic tachometer, whereas said assembly is **characterised in that** the annular gears (1, 2) are placed coaxially to the axle of the wheel with gear toothings cut on their internal circumference while sharp-edged toothings are cut on their external circumference, the intermediate mobile (3) being placed inside these annular gears into which it engages while the reverse-lock ratchets (4, 5) and the mechanical or electronic tachometers are placed outside the annular gears in their hubs (13, 14).

2. A device according to claim 1, **characterised in that** the intermediate mobile (3) is repeated in three identical units inside the annular gear in order to enable the gear toothings to sustain the engine torque, whereas these mobiles are mounted free on three axles fixed solidly on the flange (40), said flange being firmly locked with respect to the fixed axle of the wheel and the rear fork of the bicycle.

3. A device according to the claims 1 and 2, **characterised in that** the whole mechanism is contained in two rigid gear cases which form the hub of the wheel, coaxially to the annular gears (1) and (2) which rotate with respect to one another in order to build a tight housing, whereas the first gear case (44) contains the hub (13) wherein rotate the annular gears (1), a hub which carries the tachometers (51) and the ratchets (4, 5) of these gears, whereas the second gear case (46) contains the hub (14) wherein rotate the annular gears (2), a hub which carries the tachometers (51) and the ratchets (4) and (5) of these gears, both these gear cases (44) and (46) are pushed towards one another by the roller bearings (48) and (49) whereof the cups are opposite to compensate for the play and rest upon one another while rotating thanks to the large roller bearing (50).

4. A device according to the claims 1, 2 and 3, **characterised in that** the electronic tachometer of the annular gears (2) on the pedal and bottom bracket bearing assembly side (56, 61) comprises two speed counters, whereof the one enables to measure the absolute speed of the hub (14) with respect to the fixed plate (40) and whereof the other enables to measure the relative speed of the hub (14) with respect to the hub (13), whereas the conjunction of both these speeds indicates to the microprocessor which speed ratios should be selected.

5. A device according to claims 1, 2 and 3, **characterised in that** the annular gears (2) are replaced with an annular gear without sharp teeth fixed on the gear case (48) while the tachometer and the ratchets on the pedal and bottom bracket bearing assembly side have been removed, thereby forming a simplified device wherein solely the annular gears (1) on the wheel side control the different speed ratios.

6. A device according to the claims 1, 2 and 3, **characterised in that** the three intermediate mobiles are mounted free on three axles fixed firmly on the internal face of the gear case (46), rotating thus as a satellite while engaging onto the toothed section cut into the fixed flange (40) and by resting upon it in order to transmit the driving force to the annular gears (1) inside which they engage, whereas these gears are carried by the hub (13) and form thereby a simplified device wherein the gears (2) and their controls have been removed from the pedal and bottom bracket bearing assembly side.

7. A device according to the claims 1, 2 and 3 wherein the control of the slaved ratchets is performed fully automatically by mechanical tachometers, **characterised in that** they are compensated for in order to take into account only the centrifugal force thanks to four feeders (26) and (27) diametrically opposed, mounted on four squares (24) pivoting on a plane perpendicular to the axle of the wheel and connected together by the pins (28) so that the feeders pull away from or come closer to the centre of rotation simultaneously, thereby suppressing any spurious loads not related to the centrifugal force.

8. A device according to claims 1, 2, 3, 4, 5, 6 and 7, **characterised in that** the whole coaxial system incorporated into the rotary gear cases (44) and (46) is mounted on the axle of the wheel, whereas the rotary gear case (44) then carries the spokes (45) of the rear wheel of the bicycle whereas the gear case (46) carries a fixed pinion (47) which receives the chain that transmits the driving force from the pedal and bottom bracket bearing assembly, whereas both these gear cases form together the hub of the wheel.

9. A device according to the claims 1, 2, 3, 4, 5, 6, 7 and 8, **characterised in that** the whole coaxial incorporated into the rotary gear cases (44) and (48) is mounted on the axle of the pedal and bottom bracket bearing assembly, whereby the right-hand pedal is fixed on the driving gear case instead of the fixed pinion (47) and the plate of the chain on the driven gear case instead of the spokes, whereas the rear wheel of the bicycle is simply fitted with a chain transmission fixed pinion.
